# EUROPEAN PATENT SPECIFICATION

(11) **EP 3 521 651 B1**
(45) Date of publication and mention of the grant of the patent: **25.11.2020**
(21) Application number: 19155143.1
(22) Date of filing: 01.02.2019
(51) Int. Cl.: F16D 65/12

(54) **BRAKE DISC ASSEMBLY**
BREMSSCHEIBENANORDNUNG
ENSEMBLE DE DISQUE DE FREIN

(30) Priority: 01.02.2018 GB 201801632
(43) Date of publication of application: 07.08.2019
(73) Proprietor: Saunders, Walter Emil, IM5 2AQ German (IM)
(72) Inventor: Saunders, Walter Emil, IM5 2AQ German (IM)
(74) Representative: Sandersons

(56) References cited:
- EP-A1- 2 048 404
- DD-A1- 137 910
- DE-A1-102009 003 643
- DE-B3- 10 234 104
- FR-A1- 2 497 307

## Description

This invention relates to a brake disc assembly suitable for use in the construction of a disc brake for use, for example, on a motorcycle or bicycle though the brake disc assembly could be used elsewhere.

With motor cars (automobiles) it is the usual practice for a brake disc to be manufactured integrally with a hub by means of which the disc is secured to a wheel hub. A caliper for the assembly is mounted on a suspension component and may be fixed relative thereto, in which case the caliper uses a pair of opposed pistons arranged one each side of the disc and operating directly on a pair of brake pads. Instead, the caliper may be floating, such that the caliper may slide in the axial direction with respect to the disc, the caliper then having a single piston operating on one pad and a part of the caliper operating on a second pad disposed on the opposed side of the disc.

In the case of a motorcycle or pedal bicycle, the mounting of a floating caliper on a suspension component is difficult in view of the restricted space available for this purpose and the configuration of a wheel support leg. As such, it is the usual practice to employ a caliper fixed to a wheel support leg and having a pair of opposed pistons each driving a respective brake pad.

As a consequence, it is the usual practice with modern motorcycles to arrange for a brake disc to have a small degree of freedom in the axial direction, such that the disc itself may float to a limited extent, thereby increasing rotor stability, braking performance and service life, whilst reducing the possibility of 'off brake' rattle and warpage under the most extreme of conditions.

It is known to attach a brake disc to a wheel hub or a separate disc hub by means of resilient mountings which can provide the required degree of float for the disc. Though this is satisfactory when the brake is first assembled, the resilient mountings tend to wear, giving excessive freedom of movement for the disc and in turn this can lead to vibration, under-braking and poor braking performance. Also, a significant number of components are required for such an assembly. As an alternative, the brake disc may be constructed in two parts - a central hub and an annular rotor surrounding the hub and connected thereto in such a way that the rotor has a limited degree of freedom in the axial direction, with respect to the hub.

There have been various proposals for such a brake disc assembly, such as in EP1553322; here, the hub has a plurality of circumferential slots in which a like plurality of teeth provided on the rotor are engaged, a resilient L-shaped ring (or circlip) being arranged to hold the rotor engaged with the hub. In the event that the circlip should fail, the disc brake will fall apart and so there is a potential risk to life. Further, the manufacture of this disc brake requires many machining operations and moreover the provision of a circlip adds to the weight and complexity of the construction.

DE 102 34 104 relates to a brake disc comprising a friction ring and a holding part, which are connected to one another by a connecting ring. The connecting ring is characterized in that it has bending beams in its outer circumferential area which engage in a form-fitting manner in the friction ring and thus compensate for the radial thermal expansion.

FR 2 497 307 relates to a disc brake comprising a disc, a drive shaft and a disc caliper. The drive shaft is grooved or splined and the disc is machined to fit over the shaft. To maintain the disc in place on the shaft, three leaf springs are machined in the disc. The leaf springs are formed by cutting an L-shaped slot into the disc, equi-spaced around the base circumference. The leaves are forced radially outwards when the disc is assembled onto the shaft. A chamfered lead is machined on the teeth of the shaft splines to assist the assembly.

Conventional pedal bicycle brakes are a kind of disc brake in that a pair of brake shoes are clamped axially against the rim of the wheel. Increasingly, for improved braking performance on bicycles, there is a trend towards providing a more conventional kind of disc brake where a disc is secured to the wheel hub and has a caliper operating on that disc, separately from the wheel rim. In the case of a bicycle, there is a demand for a disc brake which is very simple and of light weight, but these requirements are only poorly satisfied by the current designs.

A further problem with disc brake assemblies for motorcycles and bicycles used in competitions such as road racing and particularly cross-country events is that it may be necessary to change a brake disc but the known assemblies do not easily lend themselves to that. There is thus a demand for a lightweight brake disc assembly having a floating rotor and which is easy to service or replace, should the need arise.

According to this invention, there is provided a brake disc assembly comprising a hub having a substantially planar outer region and arranged for connection to a rotatable component, and an annular brake rotor mounted on the hub to be normally co-planar with the outer region thereof, the rotor including a plurality of fingers extending generally in the circumferential direction co-planar with said outer region and the hub defining a like plurality of sprung pegs with inwardly directed recesses or a circumferential slot, the free ends of the fingers being releasably connected into the recesses of the respective pegs or into the circumferential slot, the fingers being resiliently deformable in the axial and radial directions whereby the rotor is restrained to lie substantially co-planar with the hub but resilient deformation of the fingers in the axial direction allows the rotor to float axially with respect to the hub and resilient deformation of the fingers in the radial outward direction allows said free ends to be disengaged from the pegs or the circumferential slot so freeing the rotor from the hub, wherein the connections between the ends of the fingers and the pegs or the circumferential slot restrain relative movement therebetween in the axial direction.

With the disc brake assembly of this invention, there are only two components: the hub and the annular rotor mounted on the hub and extending therearound. The connections between the ends of the resiliently deformable fingers and the pegs or the circumferential slot should serve to restrain relative movement therebetween in the axial direction, but which allow the rotor to float axially by resilient flexing of the fingers. When the rotor is to be removed from the hub, the fingers are flexed in the radial direction so as thereby to come free of the pegs; the rotor may then be lifted away from the hub. Conversely, the fitting of a rotor to the hub again requires resilient flexing of the fingers in the radial direction to give sufficient clearance for the rotor to be brought into a co-planar alignment with the outer region of the hub whereafter release of the fingers allows the free ends to engage the pegs or the circumferential slot.

The invention may be implemented in practical embodiments in various ways. A first species utilises the fingers both to locate the rotor concentrically on the hub while allowing a limited degree of float in the axial direction and to transfer torque from the rotor to the hub. A second species utilises the fingers to locate the rotor concentrically on the hub while allowing a limited degree of float in the axial direction, with torque being transferred from the rotor to the hub through separate interengaging formations on the hub and rotor.

In an embodiment of the first species, each peg is provided on the outer peripheral surface of the hub and defines a slot extending in the axial direction, the free end of a corresponding finger being located in that slot. A recess may be defined within the slot so as to extend radially inwardly therefrom; in this case, the free end of the associated finger received within that slot should have a projection which is engaged with the recess, thereby to allow torque to be transferred from the projection to the recess. Conveniently, the free end of each finger has a head region turned towards the hub and which head region is engaged with the slot in the peg.

With the second species, one of the hub and rotor is provided with at least one radially projecting torque tooth, but preferably a plurality of circumferentially-spaced torque teeth, receivable in one or preferably a plurality of grooves formed in the other of the hub and rotor, for transferring torque from the rotor to the hub. In one embodiment the torque teeth are provided on the rotor so as to project radially inwardly and the corresponding grooves are formed in the hub, preferably with each groove formed in a respective lug projecting radially outwardly from the periphery of the hub. The fingers are formed on the annular rotor and project from the inner periphery thereof, a like plurality of pegs projecting radially outwardly from the outer periphery of the hub and defining circumferentially-extending slots in which the free ends of the fingers are received, though the fingers could be provided on the hub and the pegs on the rotor.

In a second embodiment of the second species, the free end of each finger defines a slot within which is received a corresponding peg formed on the rotor. In this embodiment, each slot extends circumferentially of the finger, in a head turned to project radially outwardly from the free end of the respective finger. In the alternative, the free end of each finger may define a projection which is received in a slot formed in a corresponding peg provided on the rotor. In this case each slot should extend circumferentially, in the radially inner end of the associated peg.

In another embodiment of the second species, one of the hub and the rotor is provided with a radially-projecting torque tooth receivable in a pocket/groove in the other of the hub and rotor, for transferring torque from the rotor to the hub. Preferably, there is a multiplicity of circumferentially-spaced torque teeth each receivable in a corresponding groove by relative axial movement between the rotor and hub.

The torque teeth may be provided on the rotor and project radially inwardly, and the corresponding grooves may be formed in the hub. The outer region of the hub may have an outer periphery substantially of circular form and said grooves may extend radially inwardly from that periphery. The fingers may be formed on the annular rotor and project from the inner periphery of the rotor thereof. The circumferential slot may be defined on the inner peripheral surface of the rotor for receiving the fingers therein.

The torque teeth may be provided on the hub and project radially outwardly, and the corresponding grooves may be formed in the rotor. The inner region of the rotor may have an inner periphery substantially of circular form and said grooves may extend radially outwardly from that periphery. The fingers may be formed on the annular hub and project from the outer periphery of the hub. The circumferential slot may be defined on the inner peripheral surface of the rotor for receiving the fingers therein.

The rotor may further comprise a plurality of grooves or holes designed and arranged to improve heat dissipation.

By way of example only, specific embodiments of brake disc assembly of this invention will now be described in detail, reference being made to the accompanying drawings in which:-
Figures 1A, 1B and 1C are respectively assembled, exploded and partial sectional views of a first embodiment of brake disc assembly of this invention;
Figures 2A, 2B and 2C are respectively a side view, a partial side view and a sectional view taken on line B-B marked on Figure 2B of the first embodiment;
Figure 7 is an assembled view of a fourth embodiment of brake disc assembly of this invention;
Figures 8A, 8B, 8C and 8D are respectively a side view, a partial side view and sectional views taken on lines D-D and E-E marked on Figure 8B of the fourth embodiment;
Figures 13A, 13B and 13C are respectively assembled, exploded and partial sectional views of the seventh embodiment of brake disc assembly of this invention; and
Figures 14A, 14B and 14C are respectively a side view, a partial side view and a sectional view taken on line B-B marked on Figure 14C of the seventh embodiment.

Throughout the following description of the various embodiments of this invention, insofar as is possible the same nomenclature and reference characters will be used to describe essentially the same parts, even if the precise configuration of those parts differs, so long as the function of those parts is the same. For example, throughout this description the hub is referenced 15 and the annular rotor 16, even though the exact configuration of the hub and rotor differs for each embodiment.

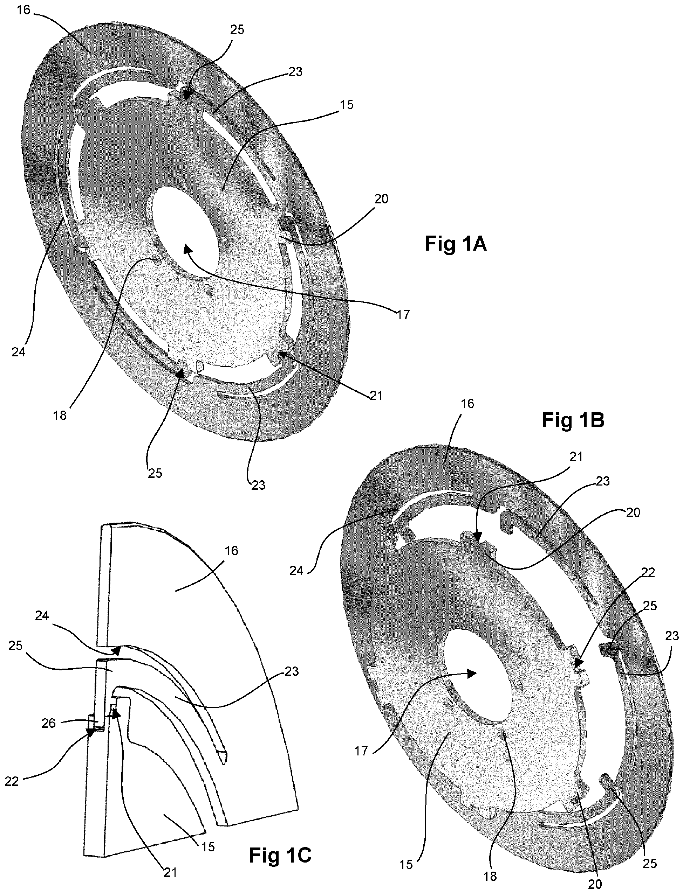

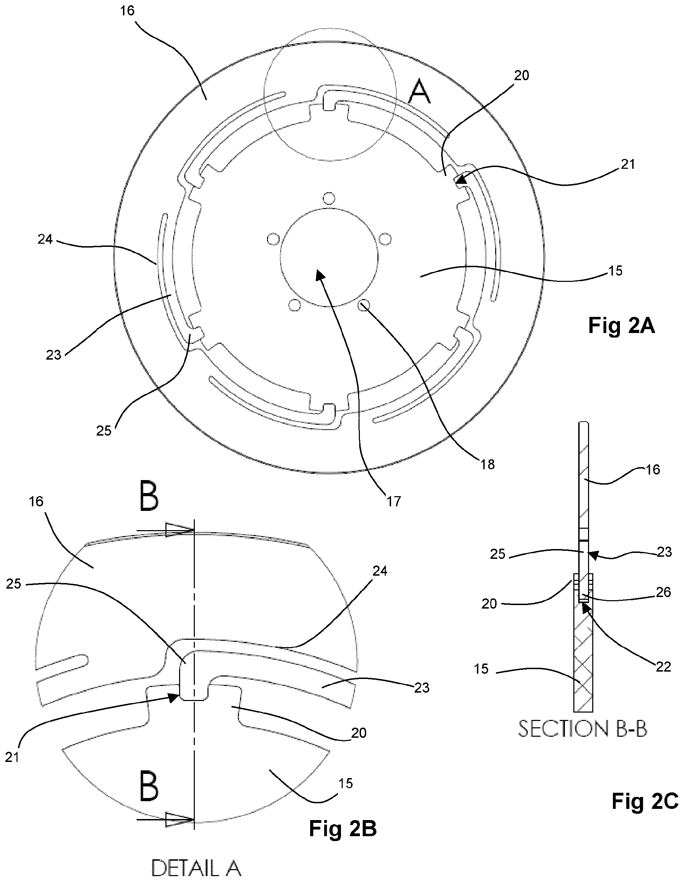

Referring initially to Figures 1A to 1C and 2A to 2C, there is shown a first embodiment of brake disc assembly comprising a planar hub 15 which supports a co-planar annular rotor 16. A bore 17 is provided through the centre of the hub and equi-spaced therearound is a plurality of mounting holes 18 by means of which the hub may be secured to a wheel, a wheel hub or the like (not shown). In this first embodiment, the periphery of the hub has six radially outwardly-projecting pegs 20 each peg defining a transverse slot 21. As best seen in Figure 2C, centrally of each slot 21 is formed a radially inwardly-directed recess 22, for a purpose to be described below.

The rotor 16 is thinner than the hub 15 and is provided with six integrally formed fingers 23, each extending from the inner periphery 24 of the rotor 16 generally in the circumferential direction and having at its free end a head 25 turned through substantially 90°, towards the hub 15. As best seen in Figures 1C and 2C, each head 25 is formed with a radially-inward projection 26 which, in the assembled disc shown in Figures 1A, 1C and Figures 2A to 2C is received in the recess 22. The rotor 16 is formed from metal having resilient properties such that the fingers 23 are resiliently deformable from their relaxed state, both in the radial and axial directions.

The configuration is such that when the rotor 16 is assembled to the hub 15 as shown in Figures 1A and 2A to 2C, the fingers 23 are resiliently deformed slightly in the radially outward direction, but such that there is sufficient clearance between each finger and the inner periphery 24 of the rotor for all of the fingers to be resiliently deformed in the radially outward direction for all of the projections 26 to come free of the respective recesses 22 thereby to allow the rotor to be moved axially with respect to the hub with the heads 25 sliding transversely along the slots 21, until the rotor is entirely free from the hub. Conversely, the fingers may be resiliently deformed towards the inner periphery 24 of the rotor to an extent sufficient to allow the fingers to be slid in the axial direction along the respective slots 21 until the projections 26 are aligned with the recesses 22. Then, releasing the fingers allows the projections 26 to enter the recesses 22 such that the rotor 16 is held to the hub, both concentrically and co-planar therewith.

When the rotor 16 is mounted on the hub 15 as described above, the rotor 16 is allowed a limited degree of float in the axial direction by resilient flexing of the fingers 23. Moreover, having regard to the location of the finger heads 25 in the respective slots 21, braking torque may be transferred from the rotor 16 to the hub 15 when the brake disc assembly is assembled with a caliper to form a disc brake assembly, fitted to a vehicle such as a motorcycle or bicycle.

The configuration of the fingers 23, slots 21 and pegs 20 is such that braking torque is transferred from the rotor 16 to the hub 15 through the pegs 20 and fingers 23. Further, resilient flexing of the fingers in the axial direction allows the rotor 16 to float to a limited extent with respect to the hub.

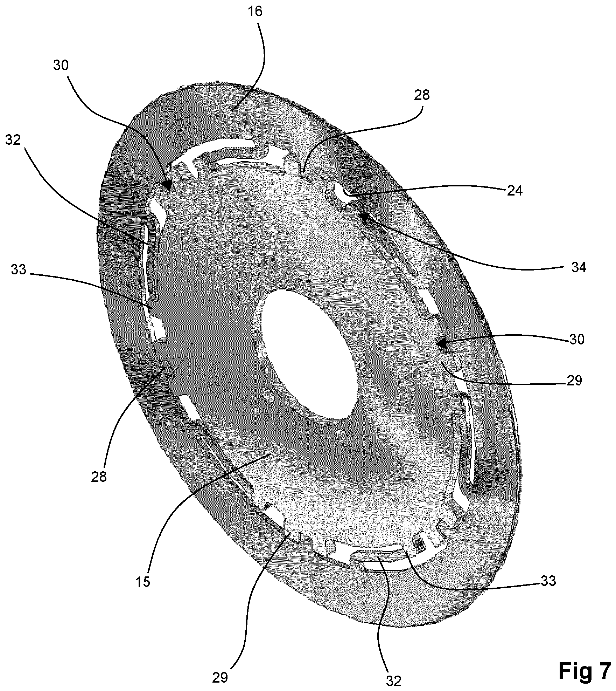

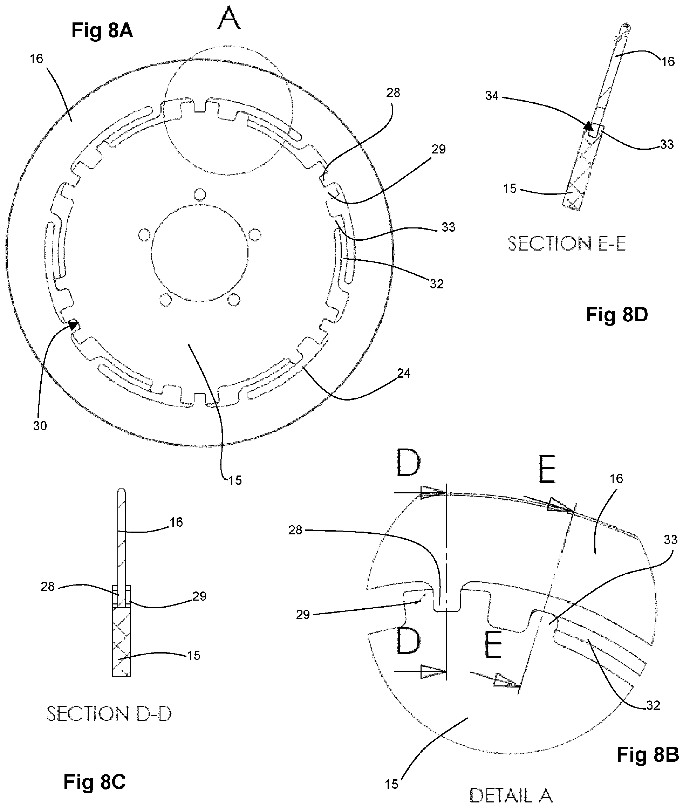

Figures 7 and 8A to 8D show a fourth embodiment differing from the first embodiment in that braking torque is transferred from the rotor 16 to the hub 15 through separate formations on the rotor and hub, rather than relying on the interconnection between the fingers 23 and pegs 20. In this fourth embodiment, there are six torque teeth 28 projecting radially inwardly from the inner periphery 24 of the rotor 16, equi-spaced around the rotor. The hub 15 has six correspondingly-spaced lugs 29 each of which defines a transverse groove 30 appropriately shaped to receive a corresponding tooth 28 of the rotor as shown in Figure 8C. Thus, when the rotor is assembled to the hub, braking torque is transferred from the rotor 16 to the hub through the interengagement of the teeth 28 with the respective lugs 29.

In this fourth embodiment, the fingers 32 are of a much thinner profile than those of the first embodiment since no torque is transferred through those fingers. Further, the connection between the free ends of the fingers 32 and the pegs 33 merely provides location in the axial direction. In the fourth embodiment, each peg 33 is formed with a circumferentially-extending slot 34 within which is received the free end of respective finger 32, as best seen in Figure 8D.

As with the previous embodiments, the rotor 16 is released from the hub 15 by resilient radial deformation of the fingers 32 until the ends thereof remote from the rotor come clear of the pegs 33, whereafter the rotor 16 may be moved axially of the hub, with the teeth 28 sliding transversely along the grooves 30 until the rotor is free of the hub. Similarly, the rotor is replaced by resilient outward flexing of the fingers 32 such that the rotor may be engaged with the hub and when properly aligned the fingers are released to allow the free ends thereof to engage the slots 34 in the pegs 33. The rotor 16 is significantly thinner than the hub 15.

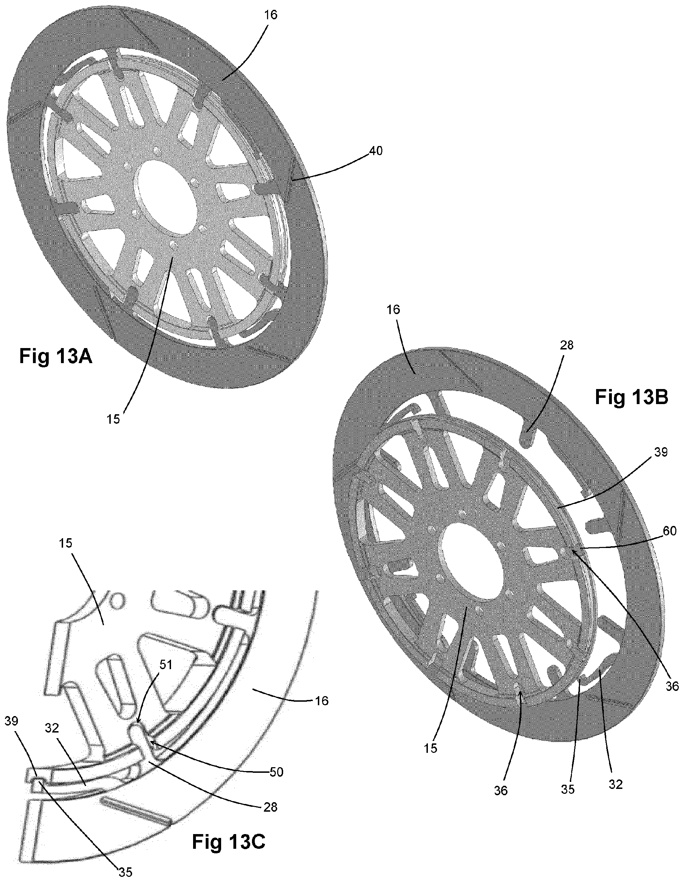

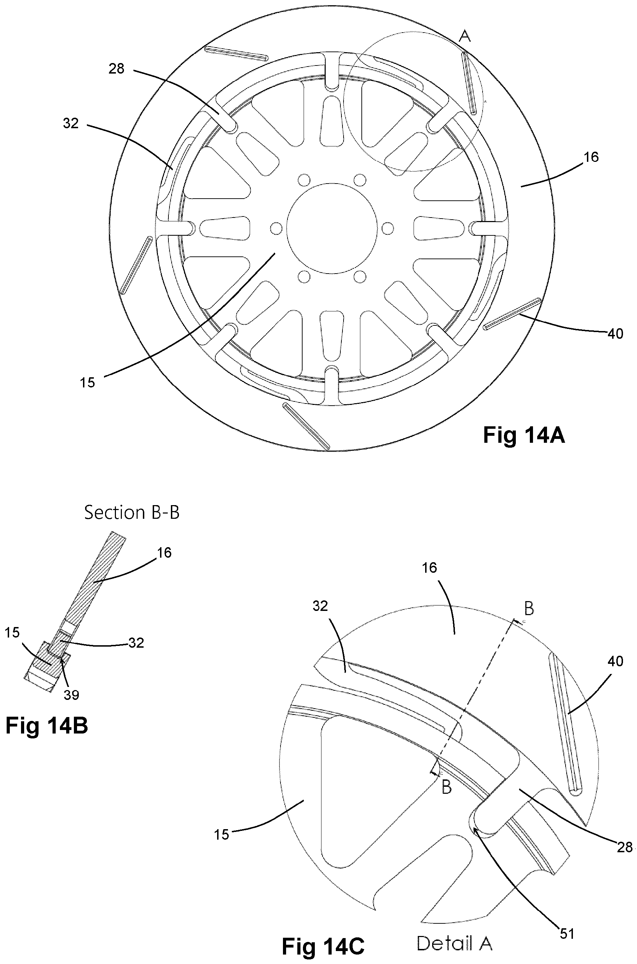

Figures 13A to 13C and 14A to 14C show a seventh embodiment differing from the first embodiment in that braking torque is transferred from the rotor 16 to the hub 15 through separate formations on the rotor 16 and hub 15, rather than relying on the interconnection between the fingers 23 and pegs 20. In this seventh embodiment, there are preferably but not exclusively eight torque teeth 28 projecting radially inwardly from the inner periphery 24 of the rotor 16, equi-spaced around the rotor 15. It will be appreciated that a different number/arrangement of torque teeth is possible. Each tooth 28 has a rounded end which is preferably but not exclusively of semi-circular shape. This is to avoid having sharp edges where stress concentration may initiate a crack for example under extreme thermal stress cycles.

The hub 15 has eight correspondingly-spaced grooves defined by pockets 36 each of which is appropriately shaped to substantially receive a corresponding tooth 28 of the rotor as shown in the assembled configuration of Figures 13B, 13C and 14B. Thus, when the rotor is assembled to the hub, braking torque is transferred from the rotor 16 to the hub 15 through the interengagement of the teeth 28 with the respective pocket 36.

As shown in Figures 13A, 13B and 13C each groove 36 is designed such that the torque tooth 28 is partially enclosed in the respective groove 36. The groove 36 extends radially inwardly from the outer periphery of the outer region of the hub, and extends axially from said outer periphery up to a back plate 60 (see Figure 13B). In the assembled configuration shown in Figure 13A or in Figure 13C, each tooth 28 abuts onto the back plate 60 of the hub.

Typically, a rotor expands or contracts in response to temperature differentials, particularly under extreme conditions. That is, the design of the present grooves provides an axial gap 50 and a radial gap 51 (see Figure 13C) which allow axial and radial movements of the tooth 28.

In this seventh embodiment, there are preferably four fingers 32, although the number of fingers may be different. Further, in this embodiment a circumferential slot 39 is designed to extend on the outer peripheral surface of the hub and to receive the free end of respective finger 32 therein, as best seen in Figure 13C or Figure 14B. Each finger comprises a head 35 which is configured to clip in the circumferential slot 39.

As with the previous embodiments, the rotor 16 is released from the hub 15 by resilient radial deformation of the fingers 32 until the ends thereof remote from the rotor 16 come clear of the circumferential slot 39, whereafter the rotor 16 may be moved axially with respect to the hub, with the teeth 28 sliding axially along the grooves 36 away from the back plate 60 until the rotor is free of the hub. Similarly, the rotor is replaced by resilient outward flexing of the fingers 32 such that the rotor may be engaged with the hub and when properly aligned the fingers are released to allow the free ends thereof to engage the circumferential slot 39.

The fingers 32 are of a thinner profile than those of the first embodiment since no torque is transferred through those fingers. However, the teeth 28 are of a thicker profile than those of the first embodiment as braking torque is transferred through the interengagement of the teeth 28 with the respective grooves 36.

The rotor also comprises elongated grooves 40 as, for example, shown in Figure 13A. As the rotor heats up and thermally expands the elongated grooves are configured to channel heat away from the wheel hub thereby improving heat dissipation, hence rotor performance. In this specific embodiment there are five elongated grooves equally spaced around the circumference of the rotor. However, it will be appreciated that various shapes and/or patterns of grooves or holes are possible.

All of the above embodiments of this invention provide a two-piece floating brake disc mounted on a hub intended for securing to a wheel or wheel hub. The embodiments are particularly suitable for use on motorcycles and bicycles, but especially so on racing motorcycles and competition bicycles as well as mountain bicycles and other off-road bicycles.

Conversely to conventional prior art brake disc rotor designs in which a floating rotor is typically bolted to the hub by means of buttons/bobbins, all of the above embodiments provide engaging elements (fingers) being configured to deform resiliently in the axial and radial directions to allow relatively quick and easy disassembly in order that the rotor may be removed and replaced by another, in the event of damage or for any other purpose. Advantageously, these designs eliminate wear and jamming which are typically associated with fastening means such as buttons/bobbins, while also increasing drive load area of the rotor on the central area of the hub and reducing the possibility of warpage under the most extreme of conditions.

The applicant wishes to emphasise that this invention provides an actual two-piece floating rotor assembly, and that, for example, any fastening means would be considered a separate piece of the rotor assembly. Therefore, a conventional two-piece rotor would be actually at least a three-piece rotor.

In summary, it will be readily appreciated that the invention of all the above embodiments provides an improved brake disc rotor assembly with enhanced weight, performance and serviceability.

## Claims

1. A brake disc assembly comprising a hub (15) having a substantially planar outer region and arranged for connection to a rotatable component, and an annular brake rotor (16) mounted on the hub to be normally co-planar with the outer region thereof, the rotor including a plurality of fingers (23,32) extending generally in the circumferential direction co-planar with said outer region and the hub defining a like plurality of pegs (20,33) with inwardly directed recesses (22,34) or a circumferential slot (39), the free ends of the fingers being releasably connected into the recesses of the respective pegs or into the circumferential slot, the fingers being resiliently deformable in the axial and radial directions whereby the rotor is restrained to lie substantially co-planar with the hub but resilient deformation of the fingers in the axial direction allows the rotor to float axially with respect to the hub and resilient deformation of the fingers in the radial outward direction allows said free ends to be disengaged from the pegs or the circumferential slot so freeing the rotor from the hub, wherein the connections between the ends of the fingers and the pegs or the circumferential slot restrain relative movement therebetween in the axial direction.

2. A brake disc assembly as claimed in claim 1, wherein the connections between the ends of the fingers and the pegs restrain movement therebetween in the circumferential direction whereby in use braking torque is transmitted from the rotor through the fingers to the hub.

3. A brake disc assembly as claimed in claim 2, wherein each peg is provided on the outer peripheral surface of the hub and defines a slot extending in the axial direction.

4. A brake disc assembly as claimed in claim 3, wherein the recess is defined within the slot and extends radially inwardly therefrom, the free end of the associated finger being received within the slot and engaged with the recess.

5. A brake disc assembly as claimed in claim 3 or claim 4, wherein the free end of each finger has a head region turned towards the hub and which head region is engaged with the slot in the peg.

6. A brake disc assembly as claimed in claim 1, wherein the rotor is provided with a radially-projecting torque tooth (28) receivable in a groove (30,36) in the hub, for transferring torque from the rotor to the hub, optionally wherein there is a multiplicity of circumferentially-spaced torque teeth each receivable in a corresponding groove by relative axial movement between the rotor and hub.

7. A brake disc assembly as claimed in claim 6, wherein the torque teeth are provided on the rotor and project radially inwardly, and the corresponding grooves are formed in the hub.

8. A brake disc assembly as claimed in claim 6 or claim 7, wherein the outer region of the hub has an outer periphery essentially of circular form and said grooves are formed in lugs (29) projecting radially outwardly from that periphery.

9. A brake disc assembly as claimed in claim 8, wherein a plurality of pegs project radially outwardly from the outer periphery of the hub and circumferentially-extending slots are formed in the radially outer ends of the pegs for receiving the fingers.

10. A brake disc assembly as claimed in claim 6 or claim 7, wherein the outer region of the hub has an outer periphery substantially of circular form and said grooves extend radially inwardly from that periphery, optionally wherein the circumferential slot is defined on the outer peripheral surface for receiving the fingers therein.

## Patentansprüche

1. Bremsscheibenanordnung mit einer Nabe (15), die einen im Wesentlichen planaren äußeren Bereich aufweist und zur Verbindung mit einer drehbaren Komponente ausgestaltet ist, und einem ringförmigen Bremsrotor (16), der an der Nabe montiert ist, um normalerweise mit dem äußeren Bereich davon koplanar zu sein, wobei der Rotor eine Mehrzahl von Fingern (23, 32) aufweist, die sich allgemein in der Umfangsrichtung koplanar mit dem äußeren Bereich erstrecken, und wobei die Nabe eine ähnliche Mehrzahl von Vorsprüngen (20, 33) mit nach innen gerichteten Aussparungen (22, 34) oder einen Umfangsschlitz (39) definiert, wobei die freien Enden der Finger lösbar in die Aussparungen der jeweiligen Vorsprünge oder in den Umfangsschlitz eingreifen, wobei die Finger in axialen und radialen Richtungen elastisch verformbar sind, wodurch der Rotor gehalten wird, um im Wesentlichen koplanar mit der Nabe zu liegen, wobei aber die elastische Verformung der Finger in der radialen Richtung es dem Rotor ermöglicht, bezüglich der Nabe axial verlagert werden zu können, und die elastische Verformung der Finger in radialer Richtung nach außen es den freien Enden ermöglicht, von den Vorsprüngen oder dem Umfangsschlitz außer Eingriff zu kommen, um so den Rotor von der Nabe zu befreien, wobei die Verbindungen zwischen den Enden der Finger und den Vorsprüngen oder dem Umfangsschlitz eine relative Bewegung dazwischen in der axialen Richtung beschränken.

2. Bremsscheibenanordnung nach Anspruch 1, wobei die Verbindungen zwischen den Enden der Finger und den Vorsprüngen eine Bewegung dazwischen in der Umfangsrichtung beschränken, wodurch im Betrieb das Brems-Drehmoment vom Rotor durch die Finger auf die Nabe übertragen wird.

3. Bremsscheibenanordnung nach Anspruch 2, wobei jeder Vorsprung an der äußeren Umfangsfläche der Nabe vorgesehen ist und einen Schlitz definiert, der sich in der axialen Richtung erstreckt.

4. Bremsscheibenanordnung nach Anspruch 3, wobei eine Aussparung in dem Schlitz definiert ist und sich davon radial nach innen erstreckt, wobei das freie Ende des zugehörigen Fingers in dem Schlitz aufgenommen ist und mit der Aussparung eingreift.

5. Bremsscheibenanordnung nach Anspruch 3 oder Anspruch 4, wobei das freie Ende von jedem Finger einen Kopfbereich aufweist, der zur Nabe geneigt ist, und wobei dieser Kopfbereich mit dem Schlitz in dem Vorsprung eingreift.

6. Bremsscheibenanordnung nach Anspruch 1, wobei der Rotor mit einem radial vorspringenden Drehmomentzahn (28) versehen ist, der in einer Nut (30, 36) in der Nabe aufgenommen werden kann, um ein Drehmoment vom Rotor auf die Nabe zu übertragen, wobei optional eine Vielzahl von in Umfangsrichtung beabstandeten Drehmomentzähnen vorgesehen ist, die jeweils in einer entsprechenden Nut aufgenommen werden können, und zwar durch relative axiale Bewegung zwischen dem Rotor und der Nabe.

7. Bremsscheibenanordnung nach Anspruch 6, wobei die Drehmomentzähne an dem Rotor vorgesehen sind und radial nach innen vorstehen, und wobei die entsprechenden Nuten in der Nabe ausgebildet sind.

8. Bremsscheibenanordnung nach Anspruch 6 oder Anspruch 7, wobei der äußere Bereich der Nabe einen äußeren Umfang mit im Wesentlichen kreisförmiger Gestalt hat, und wobei die Nuten in Nocken (29) ausgebildet sind, die von diesem Umfang radial nach außen vorstehen.

9. Bremsscheibenanordnung nach Anspruch 8, wobei eine Mehrzahl von Vorsprüngen vom äußeren Umfang der Nabe radial nach außen vorstehen, und wobei sich in Umfangsrichtung erstreckende Schlitze in den radial äußeren Enden der Vorsprünge ausgebildet sind, um die Finger aufzunehmen.

10. Bremsscheibenanordnung nach Anspruch 6 oder Anspruch 7, wobei der äußere Bereich der Nabe einen äußeren Umfang mit im Wesentlichen kreisförmiger Gestalt hat, und wobei sich die Nuten von diesem Umfang radial nach innen erstrecken, wobei optional der Umfangsschlitz an der äußeren Umfangsfläche definiert ist, um die Finger darin aufzunehmen.

## Revendications

1. Ensemble de disque de frein comprenant un moyeu (15) présentant une zone extérieure substantiellement plane et agencé pour se connecter à un composant rotatif, et un rotor de frein annulaire (16) monté sur le moyeu pour être coplanaire avec la zone extérieure du moyeu, le rotor incluant une pluralité de doigts (23,32) s'étendant d'une manière générale dans la direction circonférentielle coplanaire avec ladite zone extérieure et le moyeu définissant comme une pluralité de chevilles (20, 33) avec un renfoncement (22, 34) dirigé vers l'intérieur ou une fente circulaire (39), les extrémités libres des doigts étant connectées de manière séparable dans les renfoncements des chevilles respectives ou dans la fente circulaire, les doigts étant élastiquement déformables dans les directions axiale et radiale, ce qui contraint rotor à rester coplanaire avec le moyeu mais la déformation élastique des doigts dans la direction axiale permet au rotor de flotter axialement par rapport au moyeu et la déformation élastique des doigts dans la direction radiale vers l'extérieur permet auxdites extrémités libres de se désengager des chevilles ou de la fente circulaire libérant ainsi le rotor du moyeu, les connexions entre les extrémités des doigts et les chevilles ou la fente circulaire limitent le mouvement relatif entre les extrémités des doigts et les chevilles ou la fente circulaire dans la direction axiale.

2. Ensemble de disque de frein selon la revendication 1, dans lequel les connexions entre les extrémités des doigts et les chevilles limitent le mouvement entre les extrémités des doigts et les chevilles dans une direction circulaire de sorte qu'en cours d'utilisation, un couple de freinage est transmis du rotor via les doigts au moyeu.

3. Ensemble de disque de frein selon la revendication 2, dans lequel chaque cheville est prévue sur la surface périphérique extérieure du moyeu et définit une fente d'étendant dans la direction axiale.

4. Ensemble de disque de frein selon la revendication 3, dans lequel le renfoncement est défini à l'intérieur de la fente et s'étend radialement vers l'intérieur à partir de la fente, l'extrémité libre du doigt associé étant reçue dans la fente et engagée dans le renfoncement.

5. Ensemble de disque de frein selon la revendication 3 ou 4, dans lequel chaque extrémité libre de chaque doigt présente une zone de tête tournée vers le moyeu et dont la zone de tête est engagée avec la fente dans la cheville.

6. Ensemble de disque de frein selon la revendication 1, dans lequel le rotor est muni de dents de couple (28) à saillie radiale reçues dans une rainure (30, 36) dans le moyeu, pour transférer le couple du rotor au moyeu, facultativement dans lequel il y a une multitude de dents de couple espacées de manière circonférentielle chacune reçue dans une rainure correspondante par un mouvement axial relatif entre le rotor et le moyeu.

7. Ensemble de disque de frein selon la revendication 6, dans lequel les dents de couple sont prévues sur le rotor et font saillie radialement vers l'intérieur, et les rainures correspondantes sont formées dans le moyeu.

8. Ensemble de disque de frein selon la revendication 6 ou 7, dans lequel la zone extérieure du rotor présente une périphérie extérieure de forme essentiellement circulaire et lesdites rainures sont formées dans des languettes (29) en saillie radialement vers l'extérieur de cette périphérie.

9. Ensemble de disque de frein selon la revendication 8, dans lequel la pluralité de chevilles font saillie radialement vers l'extérieur de la périphérie extérieure du moyeu et des fentes s'étendant de manière circonférentielle sont formées dans les extrémités radialement extérieures des chevilles pour recevoir les doigts.

10. Ensemble de disque de frein selon la revendication 6 ou 7, **caractérisé en ce que** la zone extérieure du moyeu présente une périphérie extérieure de forme substantiellement circulaire et lesdites rainures s'étendent radialement vers l'intérieur de cette périphérie, facultativement dans lequel la fente circonférentielle est définie sur la surface périphérique extérieure pour recevoir les doigts dans les fentes.
